# EUROPEAN PATENT SPECIFICATION

(11) **EP 4 270 570 B1**
(45) Date of publication and mention of the grant of the patent: **28.10.2026**
(21) Application number: 22890176.5
(22) Date of filing: 21.09.2022
(51) Int. Cl.: H01M 10/04

(54) **REFORM PIN**
REFORMSTIFT
BROCHE DE REFORMAGE

(30) Priority: 08.11.2021 KR 20210152370
(43) Date of publication of application: 01.11.2023
(73) Proprietor: LG Energy Solution, Ltd., Seoul 07335 (KR)
(72) Inventor: LEE, Taemin, Daejeon 34122 (KR); KIM, Yongnam, Daejeon 34122 (KR)
(74) Representative: Goddar, Heinz J.
(86) International application number: PCT/KR2022/014089
(87) International publication number: WO 2023/080440

(56) References cited:
- JP-A- 2008 218 133
- JP-A- 2010 055 753
- JP-B2- 3 350 948
- KR-A- 20160 083 685
- KR-A- 20160 083 685
- KR-A- 20160 083 687
- KR-A- 20160 083 687
- KR-B1- 101 726 381

## Description

### [Technical Field]

The present invention relates to a reform pin, and more particularly, to a reform pin for uniformly forming a jelly-roll shape when an electrode assembly of a cylindrical battery is manufactured.

### [Background Art]

Lithium batteries are being applied to various industrial fields, such as mobile application devices, automobiles, robots, and energy storage devices, as a response to today's environmental regulations and high oil price issues.

Such lithium batteries are generally classified into cylindrical, prismatic, or pouch types according to the shape of an exterior material in which the electrode assembly is accommodated.

Among them, the cylindrical battery is provided in a battery pack (Cell To Pack, CTP) structure consisting of a plurality of battery cells. Accordingly, as compared to a prismatic or pouch-type battery provided in a battery pack structure consisting of a plurality of battery modules, the cylindrical battery has advantages in that a packaging size may be reduced and mass production is possible due to a standardized size.

On the other hand, the cylindrical battery includes a jelly roll-shaped electrode assembly consisting of a positive electrode plate, a separation membrane, and a negative electrode plate.

The electrode assembly having a jelly roll structure is provided by winding the electrode assembly by using a winding core.

In more detail, the winding core contacts a negative electrode tab and one side of a hollow portion of the electrode assembly to serve as a support when the electrode assembly is wound. Accordingly, when the winding core is removed after winding the electrode assembly, a sidewall of the electrode assembly that is in contact with the winding core may be separated to form a separation membrane.

Accordingly, during the manufacturing of the electrode assembly, a reforming process for maintaining the shape of the jelly roll is performed as a post-process.

In general, a reforming process is a process for molding an electrode assembly in a shape of a jelly roll, and progresses in the form of inserting a reform pin into a portion from which the winding core is removed, and pushing a separation membrane separated from the electrode assembly into the inner wall of the electrode assembly and making the separation membrane be in close contact with the inner wall.

At this time, in the related art, the reforming process was performed by using a reform pin provided with a conical head portion, but there are disadvantages in that the electrode assembly and the reform pin are in surface contact with each other, which makes it difficult to remove the separation membrane when the inserted reform pin is removed, and the reforming in the direction of the negative electrode tab is difficult.

The document KR 2016 0083687 A discloses a reform pin having a double-bent structure, which enables winding of the electrode assembly such that the separator is pressed into close contact.

The document KR 2016 0083685 A discloses a reform pin having a tapered end and a double-bent portion with reduced diameter between the body and the end, configured to remove the taiji-pattern separator from the center of the electrode assembly.

The document KR 101 726 381 B1 discloses a reform pin having a head portion that is gradually tapered from its body portion, configured to shape the central hollow portion of the electrode assembly into a cylindrical form after winding.

### [Detailed Description of the Invention]

### [Technical Problem]

The present invention is to solve the problems of the prior art, and to provide a reform pin having high performance and high reliability.

### [Technical Solution]

In order to achieve the foregoing object, an exemplary embodiment of the present invention provides a reform pin for insertion into a hollow portion of an electrode assembly to reform a separation membrane defining an inner wall of the hollow portion, the reform pin including: a cylindrical shaped body portion having a first diameter; and a head portion having a vertex at a first end, and a second end connected to an end of the body portion, in which a second diameter of a circle at a vertical cross-section at any one point of the head portion is formed larger than the first diameter.

In this case, with respect to the any one point having the second diameter, a diameter of a vertical cross-section of the head portion gradually decreases in a direction of the first end.

Further, with respect to the any one point having the second diameter, a diameter of a vertical cross-section of the head portion gradually decreases in a direction of the second end connected to the body portion.

Further, a length of the second diameter corresponds to a width of the hollow portion of the electrode assembly.

The vertex of the head portion may be located at any one point in a virtual region having a third diameter shorter than the second diameter with respect to a central axis of the body portion.

In the meantime, the electrode assembly may be wound in a shape of a jelly roll.

Further, the reform pin may be used during a reforming process of the electrode assembly.

### [Advantageous Effects]

In a reform pin according to the exemplary embodiment of the present invention, one end of the head portion extending from the body portion is provided thicker than the body portion, so that a contact surface with an inner surface of an electrode assembly is reduced when an inserted reform pin is removed from the electrode assembly, thereby stably removing the reform pin without lifting of a separation membrane. In addition, in the reform pin according to the exemplary embodiment of the present invention, since the vertex of the head portion is formed to be inclined to one side, it is possible to provide a high-performance and highly reliable reform pin that may be easily inserted while avoiding the separation membrane in which a lifting phenomenon occurs when the reform pin is inserted into the hollow portion of the electrode assembly.

### [Brief Description of Drawings]

FIG. 1 is an image of a reform pin inserted into an electrode structure.
FIG. 2 is an image of an electrode structure wound by a winding core.
FIG. 3 is a cross-sectional view of the reform pin in the related art in FIG. 1 cut along the y-axis.
FIG. 4 is a cross-sectional view of the reform pin in the related art in FIG. 1 cut along the x-axis.
FIG. 5 is an image of a reform pin inserted into an electrode structure according to an exemplary embodiment of the present invention.
FIG. 6 is a cross-sectional view of the reform pin according to the exemplary embodiment of the present invention in FIG. 5 taken along the y-axis.
FIG. 7 is a cross-sectional view of the reform pin according to the exemplary embodiment of the present invention in FIG. 5 taken along the x-axis.
FIG. 8 is an image of an electrode structure wound by the reform pin according to the exemplary embodiment of the present invention.
FIG. 9 is an image of an electrode structure in which a positive electrode tab wound by using a reform pin in the related art according to a comparative example of the present invention is positioned.
FIG. 10 is an image of an electrode structure in which a negative electrode tab wound by using a reform pin in the related art according to a comparative example of the present invention is positioned.
FIG. 11 is an image of an electrode structure in which a positive electrode tab wound by using a reform pin according to an experimental example of the present invention is positioned.
FIG. 12 is an image of an electrode structure in which a negative electrode tab wound by using the reform pin according to an experimental example of the present invention is positioned.

JR: Electrode assembly
H: Hollow portion of electrode assembly
D: Separation membrane
C: Center portion of reform pin
B: Body portion of reform pin in the related art
T: Head portion of reform pin in the related art
P: vertex of head portion of reform pin
R₁: Diameter of body portion
R₂: Diameter formed at first point of head portion
R₃: virtual region where vertex of head portion is located
P_{B}: Body portion of reform pin of present invention
P_{T}: Head portion of reform pin of present invention
S: Region except for region where separation membrane is formed inside hollow portion of electrode structure

### [Best Mode]

Examplary embodiments and thus specific exemplary embodiments will be illustrated in the drawings and described. In describing each drawing, like reference numerals are used for like elements.

Terms including an ordinary number, such as first, second, A, and B, are used for describing various constituent elements, but the constituent elements are not limited by the terms. The terms are used only to discriminate one constituent element from another constituent element. For example, without departing from the scope of the invention, a first constituent element may be named as a second constituent element, and similarly a second constituent element may be named as a first constituent element. A term "and/or" includes a combination of multiple relevant described items or any one of the multiple relevant described items.

It should be understood that when one constituent element is referred to as being "coupled to" or "connected to" another constituent element, one constituent element can be directly coupled to or connected to the other constituent element, but intervening elements may also be present. By contrast, when one constituent element is referred to as being "directly coupled to" or "directly connected to" another constituent element, it should be understood that there are no intervening elements.

Terms used in the present application are used only to describe specific exemplary embodiments, and are not intended to limit the present invention. Singular expressions used herein include plurals expressions unless they have definitely opposite meanings in the context. In the present application, it will be appreciated that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

All terms used herein including technical or scientific terms have the same meanings as meanings which are generally understood by those skilled in the art unless they are differently defined. Terms defined in generally used dictionary shall be construed that they have meanings matching those in the context of a related art, and shall not be construed in ideal or excessively formal meanings unless they are clearly defined in the present application.

Hereinafter, an exemplary embodiment according to the present invention will be described in detail with reference to the vertex drawings.

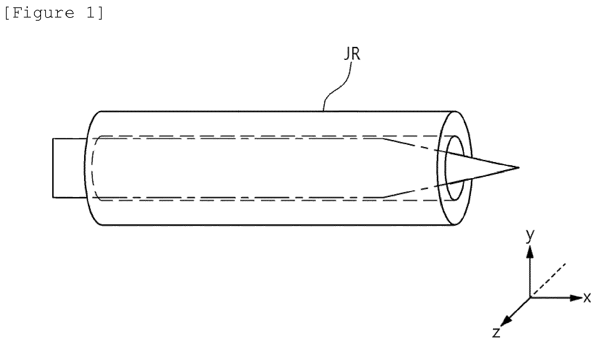

FIG. 1 is an image of a reform pin inserted into an electrode structure.

Referring to FIG. 1, the reform pin is used in the manufacturing of a cylindrical battery having a Cell To Pack (CTP) structure.

More specifically, the reform pin is used in a reforming process when a cylindrical battery is manufactured, the reform pin penetrates a hollow portion of an electrode assembly JR wound in the shape of a jelly roll by a winding core, and a separation membrane generated by frictional force when the winding core is removed may be fixed to an inner wall of the electrode assembly JR.

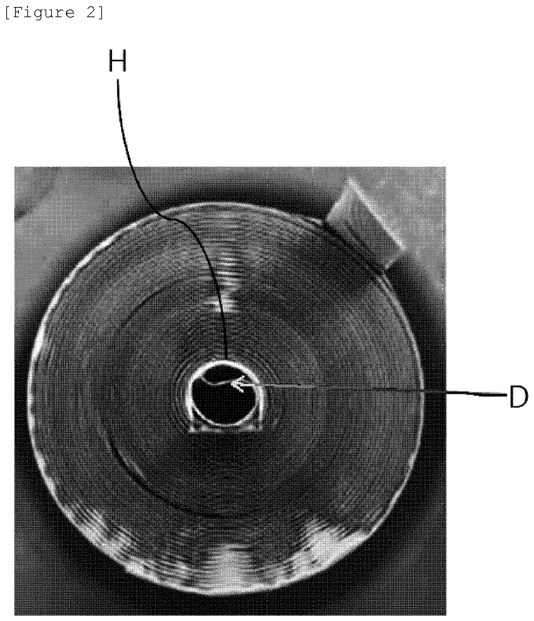

FIG. 2 is an image of an electrode structure wound by a winding core.

Referring to FIG. 2, the electrode assembly JR is provided in a structure in which a separation membrane is laminated between a positive electrode plate and a negative electrode plate, and is wound in the form of a jelly roll by a winding core. In this case, a positive electrode tab is attached to an uncoated region in which an active layer is not formed in a positive electrode plate, and a negative electrode tab is attached to an uncoated region in which an active layer is not formed in a negative electrode plate.

When the electrode assembly JR is wound in a shape of a jelly roll and the winding core is removed, at least one region of an inner wall of the electrode assembly that is in contact with the winding core is lifted by frictional force, so that a separation membrane D shaped like a Sine wave may be generated.

The separation membrane D may be damaged by the insertion of a welding rod when the electrode assembly JR is later inserted into a can and a CTW(Cylindrical Tab Welding) process is performed. Here, the CTW process may be a process of welding the negative electrode tab of the electrode assembly JR to the bottom of the can. Therefore, when the electrode assembly JR is manufactured, a reform process may be performed so that the electrode assembly JR maintains the shape of the jelly roll for a long time without damaging the separation membrane.

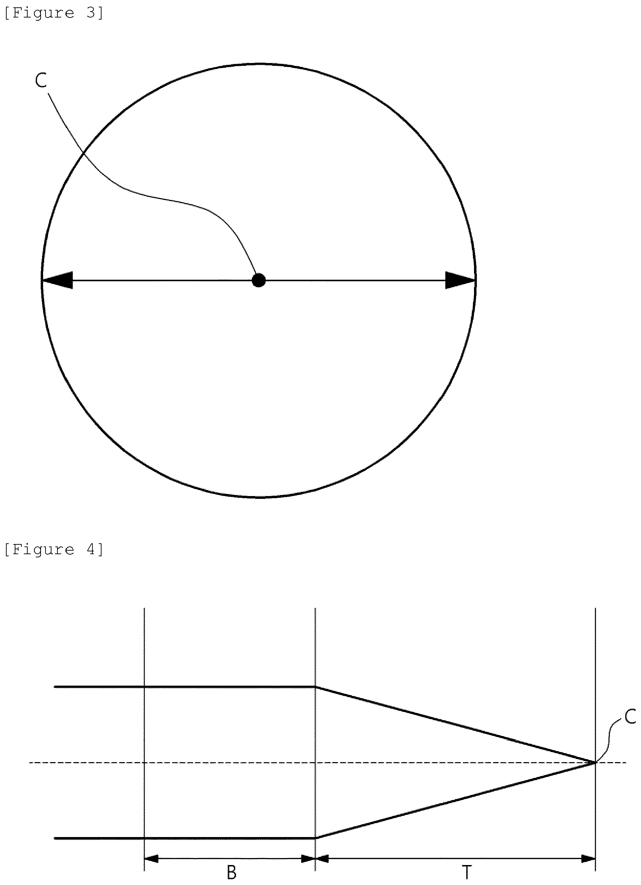

Referring back to FIG. 1, in the reform process, a reform pin is inserted into a hollow portion H of the electrode structure from which the winding core has been removed, and the Sine wave shaped separation membrane D is pushed in the outer direction of the hollow portion H, to prevent damage due to lifting of the separation membrane. The reform pin in the related art will be described with reference to FIGS. 3 and 4 below.

FIG. 3 is a cross-sectional view of the reform pin in the related art in FIG. 1 cut along the y-axis, and FIG. 4 is a cross-sectional view of the reform pin in the related art in FIG. 1 cut along the x-axis.

Referring to FIGS. 1, 3 and 4, the reform pin in the related art was provided in a three-dimensional form including a cylindrical body portion B and a conical head portion T.

The reform pin in the related art is provided so that a diameter of the body portion B corresponds to a width of the hollow portion H, so that there are disadvantages in that when the cylindrical reform pin is inserted into the hollow portion H of the electrode assembly, reforming is easy only for the separation membrane in the vicinity of the positive electrode tab where the body portion B is located, and the reforming efficiency in the vicinity of the negative electrode tab where the conical-shaped head portion T is located is lowered. In other words, there occurs disadvantages in that in the reform pin in the related art, the lifting phenomenon is improved only for the separation membrane at one end where the positive electrode tab is formed, and the reforming is difficult for the separation membrane at the other end where the negative electrode tab is formed. For example, a diameter of the reform pin in the related art was manufactured with 3.15 pi, which is 0.25 pi different from a diameter of the winding core.

In addition, when the reform pin in the related art is removed from the electrode assembly, the lifting phenomenon of the separation membrane D due to frictional force may reoccur.

More specifically, in the reform pin in the related art, the body portion B is provided in a cylindrical shape corresponding to the width of the hollow portion H, so that the reform pin is in surface contact with the inner wall of the electrode assembly JR. In other words, since the reform pin in the related art has a large contact area with the electrode assembly JR, so that when the reform pin is removed from the electrode assembly for the CTW process, the lifting phenomenon of the separation membrane D may occur again due to frictional force, similar to the case of removing the winding core. Therefore, when the reform pin in the related art is used, there is a disadvantage in that it is difficult to reform the electrode assembly with high reliability.

Accordingly, in the present invention, a reform pin capable of reforming an electrode assembly with high performance and high reliability by providing a reform pin in the form of a wad in which a diameter of a cross-section at any one point of a head portion is wider than a diameter of a cross-section of a body portion and minimizing a contact with a separation membrane when the reform pin is inserted into a hollow portion of an electrode assembly for a reform process will be described.

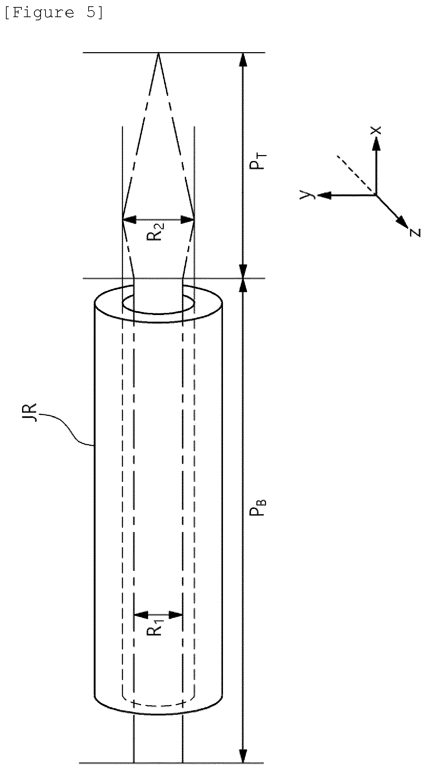

FIG. 5 is an image of a reform pin inserted into an electrode structure according to an exemplary embodiment of the present invention.

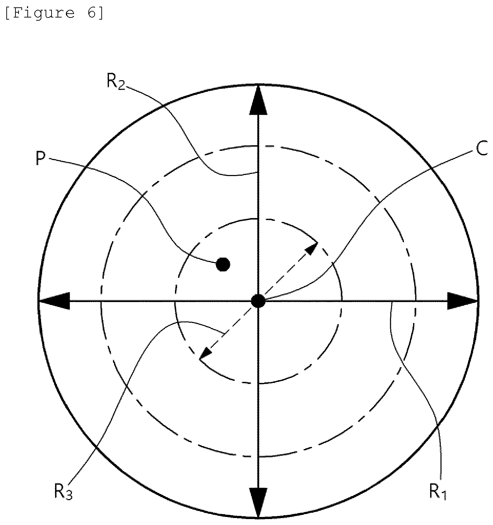

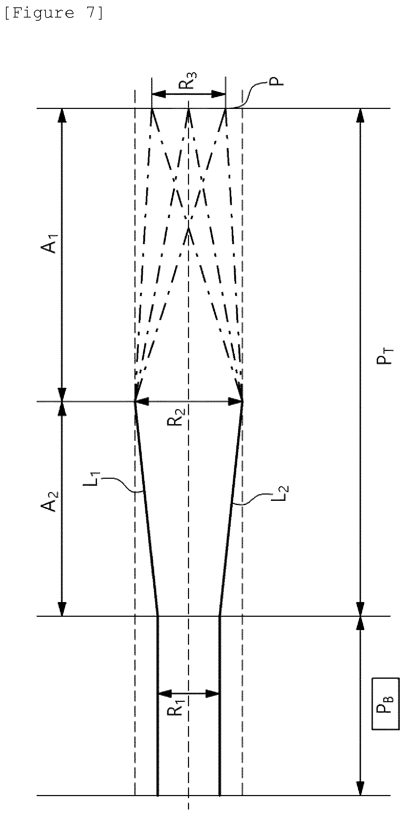

Referring to FIG. 5, as described above, the reform pin according to the exemplary embodiment of the present invention may be inserted into the hollow portion of an electrode structure to reform a positive electrode tab, a negative electrode tab, and a separation membrane. The structure of the reform pin will be described in more detail with reference to FIGS. 6 and 7 below.

FIG. 6 is a cross-sectional view of the reform pin according to the exemplary embodiment of the present invention in FIG. 5 taken along the y-axis, and FIG. 7 is a cross-sectional view of the reform pin according to the exemplary embodiment of the present invention in FIG. 5 taken along the x-axis.

Referring to FIGS. 6 and 7, the reform pin may include a body portion P_{B} and a head portion P_{T}.

According to the exemplary embodiment, the reform pin may be provided in the form of a wad in which the head portion P_{T} is larger than the body portion P_{B}.

When describing the reform pin for each configuration in more detail, the body portion P_{B} may be provided in a cylindrical shape having a first diameter R₁. In this case, the first diameter R₁ may be smaller than the diameter of the cross section of a hollow portion H of an electrode assembly JR.

The head portion P_{T} may be connected to one end of the body portion P_{B}. More specifically, a vertex P may be formed at one end of the head portion P_{T}, and one end of the body portion P_{B} may be connected to the other end of the head portion P_{T}.

The head portion P_{T} may include any one point having a vertical cross section of a second diameter R₂ larger than the first diameter R₁ of the body portion P_{B}. In other words, the head portion P_{T} may be provided as a rotating body having an arrowhead shape. For example, the second diameter R₂ may be manufactured with 3.2 pi, which is 0.2 pi different from the winding core.

More specifically, according to the exemplary embodiment, the head portion P_{T} may be divided into a first portion A₁ and a second portion A₂ based on any one point having the second diameter R₂.

The first portion A₁ may be a portion between the vertex and any one point having a second diameter R₂, and the second portion A₂ may be a portion between any one point having the second diameter R₂ and one end of the body portion P_{B}.

In this case, the length of the diameter of the head portion P_{T} in the first portion A₁ may gradually decrease from any one point having the second diameter R₂ toward the vertex. In other words, the head portion P_{T} in the first portion A₁ may be provided in a conical shape.

In this case, the length of the diameter of the head portion P_{T} in the second portion A₂ may gradually decrease from any one point having the second diameter R₂ toward the one end of the body portion P_{B}. In other words, the head portion P_{T} in the second portion A₂ may be provided in a frustoconical shape.

The vertex P of the head portion P_{T} may be located at any one point in the virtual region having a third diameter R₃ with respect to a central axis C in the horizontal direction.

According to the exemplary embodiment, the vertex P of the head portion P_{T} may be located on the central axis C.

According to another exemplary embodiment, the vertex P of the head portion P_{T} may be positioned to be biased toward one side.

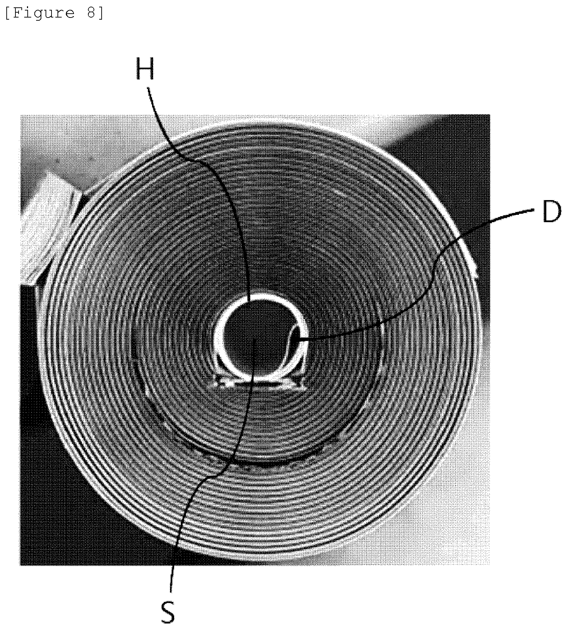

Therefore, in the reform pin according to the exemplary embodiment of the present invention, the vertex P of the head portion P_{T} is provided inclined at a predetermined angle in one direction, so that when the reform pin is inserted into the hollow portion H of the electrode assembly JR, the reform pin may be easily inserted into a region S (refer to FIG. 8 to be described later) by avoiding the separation membrane D in which the lifting phenomenon occurs.

Meanwhile, the length of the second diameter R₂ at any one point of the head portion P_{T} corresponds to the width of the hollow portion H of the electrode assembly.

FIG. 8 is an image of an electrode structure wound by the reform pin according to the exemplary embodiment of the present invention.

Referring to Figure 8, since the reform pin according to the exemplary embodiment of the present invention is provided in a larger size in at least one point of the head portion P_{T} than that of the body portion P_{B}, when the electrode assembly JR in which the hollow portion H is formed is inserted, the body portion P_{B} may not come into contact with the inner surface of the electrode assembly JR due to the size of the head portion P_{T}. Accordingly, since the reform pin according to the exemplary embodiment of the present invention has a small contact area with the electrode assembly JR and friction is minimized, so that when the reform pin is removed from the electrode assembly JR, the reform pin may be stably removed without lifting of the separation membrane D.

In addition, since the reform pin according to the exemplary embodiment of the present invention may minimize friction force and be manufactured in a micro-size, the reform pin may be easily inserted up to the vicinity of the negative electrode tab of the electrode assembly JR. Therefore, since it is possible to reform the separation membrane in the vicinity of the negative electrode tab as well as in the vicinity of the positive electrode tab, a reforming effect with high efficiency and high reliability may be expected compared to the reform pin in the related art that only reformed the separation membrane in the vicinity of the positive electrode tab.

Further, the reform pin according to the exemplary embodiment of the present invention rotates the winding core after the winding of the electrode assembly JR is completed, thereby detecting the defect of the electrode assembly JR that occurs when the inner separation membrane of the electrode assembly JR is primarily reformed.

More specifically, since the reform pin according to the exemplary embodiment of the present invention is provided in a larger size in at least one point of the head portion P_{T} than that of the body portion P_{B}, when the electrode assembly is defective, it may be difficult for the reform pin to be inserted into the hollow portion H. Therefore, the reform pin according to the exemplary embodiment of the present invention may detect a defect in the electrode assembly JR before the cylindrical can is assembled.

In the foregoing, the reform pin according to the exemplary embodiment of the present invention has been described. Hereinafter, the result of the reforming formation of an electrode assembly of a cylindrical battery using reform pins according to an experimental example and a comparative example of the present invention will be described in more detail.

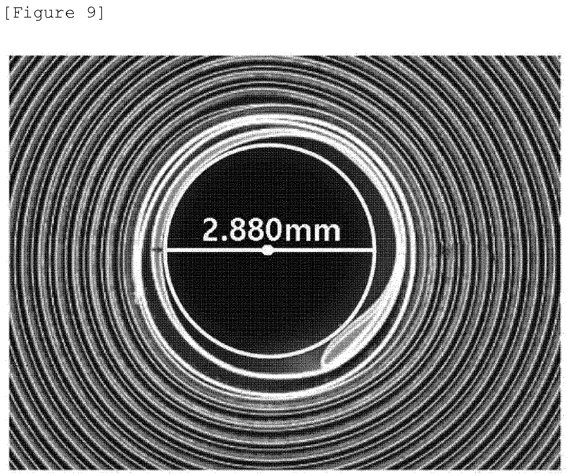

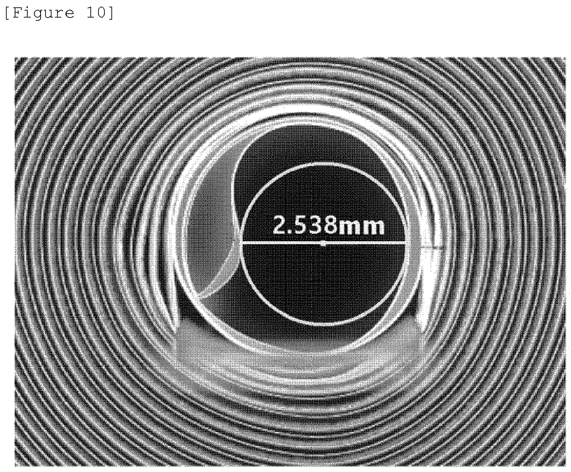

FIG. 9 is an image of an electrode structure in which a positive electrode tab wound by using a reform pin in the related art according to a comparative example of the present invention is positioned, and FIG. 10 is an image of an electrode structure in which a negative electrode tab wound by using a reform pin in the related art according to a comparative example of the present invention is positioned.

Referring to FIGS. 9 and 10, as a result of measuring the diameter of the hollow portion for the electrode assembly reformed by using the reform pin in the related art, the diameter in the vicinity of the positive electrode tab formed in the portion of the insertion end was measured to be 2.880 mm, and the diameter of the vicinity of the negative electrode tab was measured to be 2.538 mm.

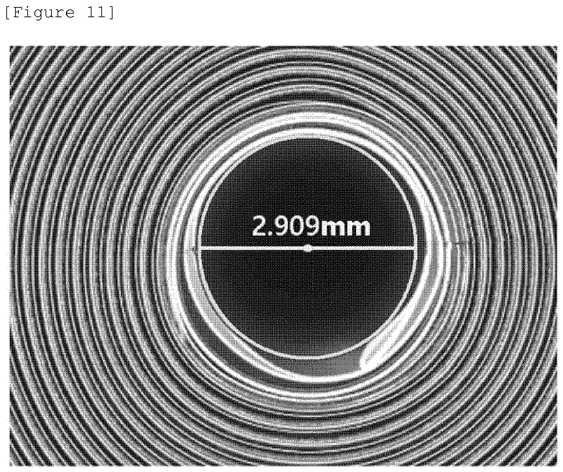

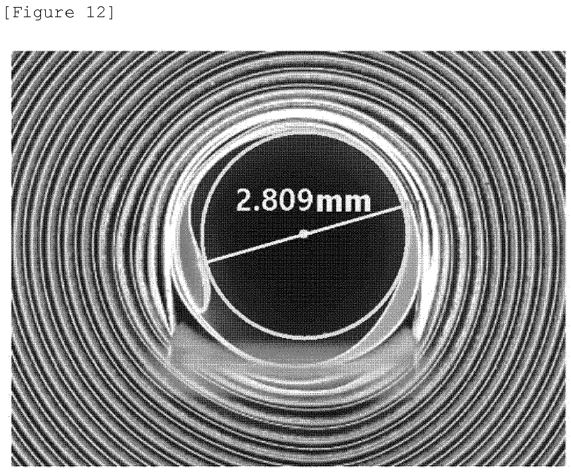

FIG. 11 is an image of an electrode structure in which a positive electrode tab wound by using a reform pin according to an experimental example of the present invention is positioned, and FIG. 12 is an image of an electrode structure in which a negative electrode tab wound by using the reform pin according to an experimental example of the present invention is positioned.

Referring to FIGS. 11 and 12, as a result of measuring the diameter of the hollow portion for the electrode assembly reformed by using the reform pin according to the exemplary embodiment of the present invention, the diameter of the vicinity of the positive electrode tab formed in the portion of the insertion end was measured to be 2.909 mm, and the diameter in the vicinity of the negative electrode tab was measured to be 2.809 mm.

As a result of comparing the reforming shape of the reform pin according to the experimental example of the present invention and the reform pin in the related art according to the comparative example, when the reform pin according to the experimental example of the present invention is used, the diameter of the hollow portion in the vicinity of the positive electrode tab is enlarged by about 0.030 mm compared to the reform formation using the reform pin in the related art, so that it can be seen that the separation membrane molding is improved to a level of 1.0%.

In addition, when the reform pin according to the experimental example of the present invention is used, the diameter of the hollow portion in the vicinity of the negative electrode tab is enlarged by about 0.268 mm compared to the reform formation using the reform pin in the related art, so that it can be seen that the separation membrane molding is improved to the level of 10.6%.

In addition, as illustrated in Table 1 below, the defect rate occurring during the winder reform process by using the reform pin according to the experimental example of the present invention and the reform pin in the related art according to the comparative example was confirmed.

**[Table 1]**

| Division | Process input quantity | Defective Quantity | Defect rate | Improvement rate |
|---|---|---|---|---|
| Comparative Example | 1.564K | 58 | 0.004% | 50% |
| Experimenta l Example | 1.068K | 17 | 0.002% | |

As represented in Table 1, when the reform pin according to the experimental example of the present invention is used, it can be confirmed that the defect rate is improved by 50% compared to the case of using the reform pin in the related art according to the comparative example.

The reform pin according to the exemplary embodiment of the present invention has been described above.

In the reform pin according to the exemplary embodiment of the present invention, one end of the head portion extending from the body portion is provided thicker than the body portion, so that the contact surface with the inner surface of the electrode assembly is reduced when the inserted reform pin is removed from the electrode assembly, thereby stably removing the reform pin without lifting of the separation membrane.

In addition, in the reform pin according to the exemplary embodiment of the present invention, since the vertex of the head portion is formed to be inclined to one side, it is possible to provide a high-performance and highly reliable reform pin that may be easily inserted while avoiding the separation membrane in which a lifting phenomenon occurs when the reform pin is inserted into the hollow portion of the electrode assembly.

The operation of the method according to the exemplary embodiment of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include a hardware device, such as a ROM, a RAM, and a flash memory, specially configured to store and execute program instructions. The program instructions may include not only machine language codes such as those generated by a compiler, but also high-level language codes that can be executed by a computer by using an interpreter or the like.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some exemplary embodiments, one or more of the most important method steps may be performed by such an apparatus.

In the forgoing, the present invention has been described with reference to the exemplary embodiment of the present invention.

## Claims

1. A reform pin for insertion into a hollow portion (H) of an electrode assembly (JR) to reform a separation membrane (D) defining an inner wall of the hollow portion (H), the reform pin comprising:
a cylindrical shaped body portion (P_{B}) having a first diameter (R₁); and
a head portion (P_{T}) having a vertex (P) at a first end, and a second end connected to an end of the body portion (P_{B}),
wherein a second diameter (R₂) of a circle at a vertical cross-section at any one point of the head portion (P_{T}) is larger than the first diameter (R₁),
wherein, with respect to the any one point having the second diameter (R₂), a diameter of a vertical cross-section of the head portion (P_{T}) gradually decreases in a direction of the first end,
wherein, with respect to the any one point having the second diameter (R₂), a diameter of a vertical cross-section of the head portion (P_{T}) gradually decreases in a direction of the second end connected to the body portion (P_{B}), and
wherein a length of the second diameter (R₂) corresponds to a width of the hollow portion (H) of the electrode assembly (JR).

2. The reform pin of claim 1, wherein the vertex of the head portion (P_{T}) is located at any one point in a virtual region having a third diameter (R₃) shorter than the second diameter (R₂) with respect to a central axis (C) of the body portion (P_{B}).

3. The reform pin of claim 1, wherein the electrode assembly (JR) is wound in a shape of a jelly roll.

4. The reform pin of claim 1, wherein the reform pin is used during a reforming process of the electrode assembly (JR).

## Patentansprüche

1. Umformstift zum Einsetzen in einen hohlen Abschnitt (H) einer Elektrodenanordnung (JR), um eine Trennmembran (D) umzuformen, die eine Innenwand des hohlen Abschnitts (H) definiert, wobei der Umformstift Folgendes aufweist:
einen zylindrisch geformten Körperabschnitt (P_{B}) mit einem ersten Durchmesser (R₁);
und
einen Kopfabschnitt (P_{T}) mit einem Scheitelpunkt (P) an einem ersten Ende und einem zweiten Ende, das mit einem Ende des Körperabschnitts (P_{B}) verbunden ist,
wobei ein zweiter Durchmesser (R₂) eines Kreises an einem vertikalen Querschnitt an einem beliebigen Punkt des Kopfabschnitts (P_{T}) größer als der erste Durchmesser (R₁) ist,
wobei in Bezug auf den beliebigen Punkt mit dem zweiten Durchmesser (R₂) ein Durchmesser eines vertikalen Querschnitts des Kopfabschnitts (P_{T}) in einer Richtung des ersten Endes allmählich abnimmt,
wobei bezüglich des beliebigen Punkts mit dem zweiten Durchmesser (R₂) ein Durchmesser eines vertikalen Querschnitts des Kopfabschnitts (P_{T}) in einer Richtung des zweiten Endes, das mit dem Körperabschnitt (P_{B}) verbunden ist, allmählich abnimmt, und
wobei eine Länge des zweiten Durchmessers (R₂) einer Breite des hohlen Abschnitts (H) der Elektrodenanordnung (JR) entspricht.

2. Umformstift nach Anspruch 1, wobei der Scheitelpunkt des Kopfabschnitts (P_{T}) an einem beliebigen Punkt in einem virtuellen Bereich mit einem dritten Durchmesser (R₃) angeordnet ist, der in Bezug auf eine Mittelachse (C) des Körperabschnitts (P_{B}) kürzer als der zweite Durchmesser (R₂) ist.

3. Umformstift nach Anspruch 1, wobei die Elektrodenanordnung (JR) in Form einer Jelly-Roll gewickelt ist.

4. Umformstift nach Anspruch 1, wobei der Umformstift während eines Umformprozesses der Elektrodenanordnung (JR) zu verwenden ist.

## Revendications

1. Broche de reformage à insérer dans une partie creuse (H) d'un ensemble d'électrodes (JR) afin de reformer une membrane de séparation (D) définissant une paroi intérieure de la partie creuse (H), la broche de reformage comprenant :
une partie de corps de forme cylindrique (P_{B}) ayant un premier diamètre (R₁) ; et
une partie de tête (P_{T}) présentant un sommet (P) à un premier bout, et un deuxième bout relié à un bout de la partie de corps (P_{B}),
un deuxième diamètre (R₂) d'un cercle sur une section transversale verticale en un point quelconque de la partie de tête (P_{T}) étant plus grand que le premier diamètre (R₁),
dans laquelle, relativement à un point quelconque présentant le deuxième diamètre (R₂), un diamètre d'une section transversale verticale de la partie de tête (P_{T}) diminuant progressivement dans le sens du premier bout,
dans laquelle, relativement à un point quelconque présentant le deuxième diamètre (R₂), un diamètre d'une section transversale verticale de la partie de tête (P_{T}) diminuant progressivement dans le sens du deuxième bout connecté à la partie de corps (P_{B}), et
une longueur du deuxième diamètre (R₂) correspondant à une largeur de la partie creuse (H) de l'ensemble d'électrodes (JR).

2. Broche de reformage selon la revendication 1, le sommet de la partie de tête (P_{T}) étant situé en un point quelconque d'une zone virtuelle présentant un troisième diamètre (R₃) plus court que le deuxième diamètre (R₂) relativement à un axe central (C) de la partie de corps (P_{B}).

3. Broche de reformage selon la revendication 1, l'ensemble d'électrodes (JR) étant enroulé sous forme de Jelly Roll.

4. Broche de reformage selon la revendication 1, la broche de reformage étant utilisée au cours d'un processus de reformage de l'ensemble d'électrodes (JR).
